# EUROPEAN PATENT SPECIFICATION

(11) **EP 1 151 443 B1**
(45) Date of publication and mention of the grant of the patent: **22.03.2006**
(21) Application number: 99963826.5
(22) Date of filing: 15.12.1999
(51) Int. Cl.: H01B 13/32, H01B 7/28, H01B 3/30, G02B 6/44

(54) **A METHOD OF MANUFACTURING A VEHICLE CABLING IN A VEHICLE**
VERFAHREN ZUR HERSTELLUNG EINER FAHRZEUGVERKABELUNG IN EINEM FAHRZEUG
PROCEDE DE MIS EN OUVRE D'UN CABLAGE DE VEHICULE DANS UN VEHICULE

(30) Priority: 15.12.1998 SE 9804330
(43) Date of publication of application: 07.11.2001
(73) Proprietor: VOLVO LASTVAGNAR AB, 405 08 Göteborg (SE)
(72) Inventor: JOHANSSON, Erik, S-448 34 Floda (SE); NILSSON, Anders, S-444 45 Stenungsund (SE); HESSELGREN, Tor, S-411 22 Göteborg (SE); REXIUS, Martin, S-443 34 Lerum (SE)
(74) Representative: Bergquist, Kjell Gunnar
(86) International application number: PCT/SE1999/002379
(87) International publication number: WO 2000/036614

(56) References cited:
- EP-A2- 0 151 900
- DE-A- 2 064 063
- DE-A1- 3 048 912
- GB-A- 1 136 149

## Description

### TECHNICAL FIELD

The present invention relates to a method for manufacturing a wear-resistant cabling (1) for a vehicle, said cabling (1) comprising a different number of insulated conductors at different parts of the cabling, the conductors (3) being housed within a protective, against mechanical wear resistant tube (2), said tube having a filling between the cabling and the tube. The cables may for example be electric conductors, fiber-optic conduits, hydraulic conduits or pneumatic conduits. The invention is primarily intended to be used for protecting a vehicle cabling on trucks or other commercial vehicles in which the cabling is subjected to vibration, dirt, moisture and dust. The cabling protection is hereby designed so as to protect the cables from chafing caused by vibrations and from corrosion related damage caused by moisture in the cabling.

### BACKGROUND

Trucks often operate in difficult operational environments in which the vehicle and its components are continuously subjected to vibration, moisture and heavy fouling. Furthermore, trucks are often operating in extreme climate environments. These operational circumstances make great demands upon component dependability for example in terms of weather resistance, temperature resistance, corrosion resistance and resistance to mechanical wear.

The cabling in a truck a chassis mainly comprises electric conductors which thus have to be protected against said harsh operational environment with some kind of cabling protection. To this end the majority of European truck manufacturers use a commercially available corrugated protective tube which is very resistant to mechanical wear and may withstand temperatures exceeding 100°C.

When a cabling is assembled, cither at the truck assembly plant or at a separate manufacturing site, a bundle of cables containing the desired cables, are inserted into the protective corrugated tube, and the ends of the tube are then sealed by the fitting of various connectors. Hereby, the cabling is sealed against dirt and moisture. In order to facilitate the insertion of the cables into the protective tube, there is generally a void space between the bundle of cables and the inner wall of the protective tube. Hereby a problem may arise when relatively few cables extend through the protective tube, since the bundle of cables - at certain natural frequencies - continuously hit the inner wall of the protective tube as a consequence of the relatively large distance between the bundle of cables and the inner wall. Eventually this leads to penetration of the insulation layer of the cables by mechanical wear between the internal corrugation rims and the surfaces of the insulation layers, said insulation layers generally consisting of a plastic material such as PVC. In cases where the cables consist of electric conductors, the penetration of the insulation layer means that the copper conduits of the conductors are exposed to condensation water within the protective tube, which quickly leads to a local corrosion-related breach of electric contact in the cabling.

Another problem with the above described background art, is that condensation water is formed in the protective tube. In an unfavorable situation, a connector may for example be attached at the lowermost situated end portion of the protective tube, in which case a column of condensation water is trapped over the connector. With time the situation may lead to water penetrating the connector with a resulting decrease of loss of function.

For products cost reason, only cable protection tubes of a certain standard dimension are used, and thus the distance between the cables and the inner walls of the protective tubes may vary depending on the local volume of conductors in any respective cabling portion. A known way to solve the above problem with wear is to decrease the distance between the cables and the inner walls of the protective tube by filling the protective tubes with more cables. Hereby, the amplitude of the vibrations will decrease, which results in a decrease of the wear on the insulation layers of the cables.

In other fields of use, it is previously known to manufacture bundles of cables with integrated cable protection in the shape of a protective tube, where the void space between the bundle of cables and the inner wall of the protective tube is injected with a foam-material. The foam-material is injected into the protective tube during the process of manufacture, whereby a cabling with a predetermined cable content may be obtained ready-made in a desired length from the manufacturer. An example of such a process is described in the European patent document EP-0 151 900, in which a foam-material is injected into the protective tube during the manufacturing process of the cabling, said foam-material having been heated to a first temperature at which the material exists in a liquid state. Then, a further heating takes place which results in a foamed expansion of the material while micro-pore bodies arc formed therein. The foam-material is stated to be a wax-like compound under the name of PETROLAT.

Another example where an injected foam-material is used as a filling between bundles of cables and the protective tube is described in the French patent document FR-2 544 506, in which a polyethylene foam or a polyurethane foam is injected into the protective tube during the process of manufacture. Gas is added in order to effect the foaming. The stated purpose of the process is said to be protection against flattening of the cabling by the application of external forces.

Yet another example of a similar solution including the use of a foam-material, is described in the Japanese patent document JP-4146940, in which a polyethylene foam is extruded into a communication conduit during the manufacturing process of the conduit.

A problem with the above solutions is however that they require the use of a foam-injecting apparatus which is expensive and impractical to use. For this reason the initially described process is used today, where separate cables are inserted into the cable protection tube during the assembly on the vehicle. As initially mentioned, the latter process is however suffering from limitation in dependability as a consequence of damage due to wear and moisture.

### SUMMARY OF THE INVENTION

The invention solves the above problems by providing a method for protecting a vehicle cabling in a vehicle, said vehicle cabling comprising one or more cables housed within a protective tube, said method being particularly characterized in:
- Inserting a longitudinal flling-element comprising an expandable foam-material into the protective tube along with the conductors, said filling element being in a substantially unexpanded state during the insertion;
- Expanding said filling- element, after insertion, in such a way that after insertion the remaining space within the protective tube is at least partially filled.

Other features and advantages of the invention will be described in the description of preferred embodiments below.

### SHORT DESCRIPTION OF THE DRAWINGS

The invention will hereinafter be described by way of a number embodiments, with reference to the appended drawings, in which:
- Figure 1: shows a cross-section of a vehicle cabling step of the method according to a first of the invention, where the filling-element is filament-shaped and extends parallel to the cables in the protective tube. In the figure, the filling-Element is shown in its unexpanded state;
- Figure 2: shows the same cross-sectional view of the vehicle cabling shown in Figure 1, but with the filling-element shown in its expanded state;
- Figure 3: shows a cross-sectional view of a vehicle cabling, in which the fining-element is filament-shaped as in Figure 1 and 2 and additionally comprises an electric heating wire extending centrally within the Flament-shaped filling-element;
- Figure 4: shows the same embodiment as in Figure 4, but with the filling-element shown in its expanded state;
- Figure 5: shows a cross-sectional view of a vehicle cabling, in which the filling-element is tube-shaped and arranged about the cables in the protective tubes. The filling-element is shown in its unexpanded state;
- **Figure 6**: shows a cross-sectional view of the embodiment shown in Figure 5, but with the filling-element shown in its expanded state;
- **Figure 7**: shows a cross-sectional view of the vehicle cabling, in which the filling-element is tube-shaped and provided with a slit, through which the cables are inserted at the assembly of the cabling. The filling-element is shown in its unexpanded state;
- Figure 8: shows a cross-sectional view of the embodiment shown in Figure 7, but with the filling-element shown in its expanded state;
- Figure 9: shows a cross-sectional view of a vehicle cabling, in which the filling-element exhibits a star-shaped cross-section. The filling-element is shown in its unexpanded state;
- Figure 10: shows a cross-sectional view of the embodiment shown in Figure 9, but with the filling-element shown in its expanded state;
- Figure 11: shows a cut-open perspective view of a vehicle cabling, in which the filling-element is wound as a spiral about the cables in a corrugated protective tube. The filling-element is shown in its unexpanded state;
- Figure 12: shows a cross-sectional view of a vehicle cabling, in which the filling-element includes magnetic metal particles which are adapted to be heated by external induction, thus indirectly causing the transformation of the filling element. The filling-element is shown in its unexpanded state.
- Figure 13: shows a cross-sectional view of the embodiment shown in Figure 12, but with the filling-element shown in its expanded state;
- Figure 14: shows a cross-sectional view of a vehicle cabling, in which the filling-element is pre-compressed, and its expansion to its uncompressed state has just been initiated. The filling-element exhibits a rectangular cross-section;
- Figure 15: shows a cross-sectional view of the embodiment shown in Figure 14, but with the filling-element shown in its expanded state;
- Figure 16: shows a cross-sectional view of the filling element according to the embodiment shown in Figure 14. The filling-element is in its pre-compressed, unexpanded state and is contained within a sealing film;
- Figure 17: shows a cross-sectional view of the embodiment shown in Figure 14, but with the filling-element shown in its expanded state, with the sealing film removed; and
- Figure 18: finally shows a packaging roll containing a length of filling element.

### DETAILED DESCRIPTION OF EMBODIMENTS

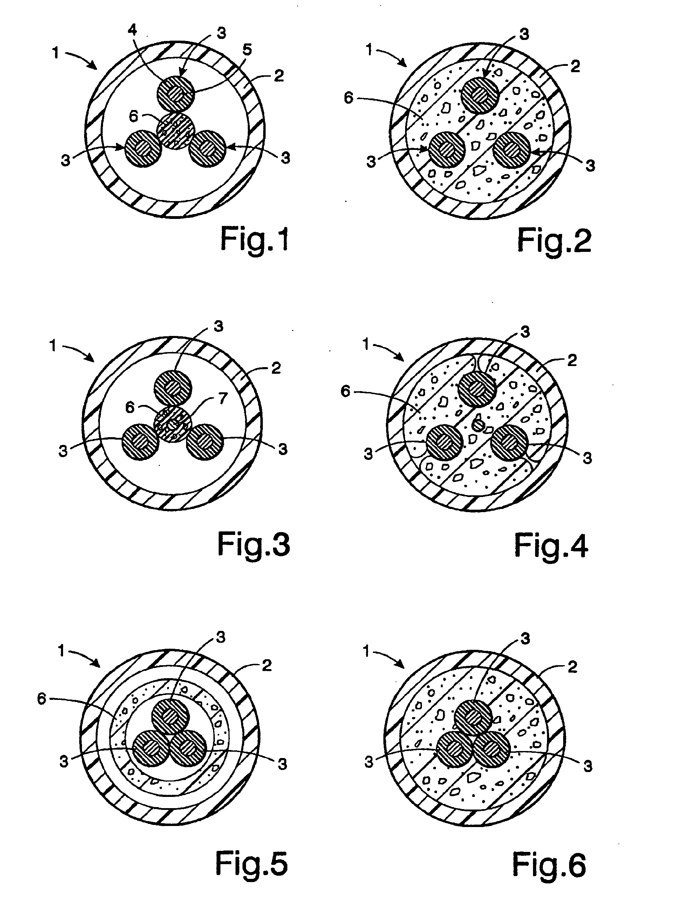

In Figure 1, reference numeral 1 generally denotes a portion of a vehicle cabling being shown in cross-section. In the figure, a first embodiment is shown. The vehicle cabling 1 of the example comprises three electric cables three housed within a protective tube 2. The protective tube 2 consists of a commercially available, corrugated PVC tube. The electric cables 3 are of a conventional type with in insulation layer 4 made of plastic, which surrounds an electric conductor 5 made of copper. A longitudinal filling-element 6 made of an expandable foam-material is arranged adjacent to the cables in the protective tube 2. The foam-material is made up of a polyethylene-based thermoplastic comprising a fermentation agent. In the shown first embodiment, the filling-element 6 is filament-shaped and extends substantially parallel to the cables 3 in the protective-tube 2. In order to ease insertion of the filling-element 6 together with the cables in the protective tube 2 - which will be described below with reference to the method according to the invention - the filling-element 6 exhibits a substantially circular cross-section and a diameter substantially corresponding to the diameter of the cables 3. The filling-element 6 may according to the figure be placed in a central position between the cables 3 or may alternatively be placed next to a bundle of cables 3 (not shown).

The filling-element 6 is adapted to be transformed from a first unexpanded state as shown in Figure 1, to a second expanded state as shown in Figure 2. Albeit, in the .shown example, the transformation is achieved under supply of heat, it is to be understood that the transformation (or expansion) may also be achieved in an alternative way - including pre-compression of the filling-element 6 - which will be further described below.

Figure 2 further shows that the filling-element substantially fills the remaining space in the protective tube after its expansion. The function according to the invention may, however, also be achieved even if the filling-element 6 should only partially fill the remaining space, since the amplitude of the oscillation of the cables 3 - when the cabling vibrates at certain natural frequencies - also decreases when the remaining space in the protective tube 2 is only partially filled.

In Figure 3 a preferred, second embodiment is shown, in which the filling-element 6 is provided with a thin electric heating wire 7 extending centrally within the tilling-element, said heating wire 7 preferably being made of copper. When the heating wire 7 is connected to an electric current source at the end (not shown) of the cabling 1, an electric current flows through the heating wire 7, which in an known manner results in a generation of heat in the wire at a consequence of its electric resistance. Hereby, the supply of heat is achieved, which is needed to expand the foam-material in the Filling-element 6 to the expanded state shown in Figure 4. Figure 4 also shows an example of the case in which the filling-element 6 only partially fills the remaining space in the protective tube 2.

With reference to Figures 1 and 2, the method according to the invention is executed by inserting the filament-shaped filling-element 6 together with the cables 3 - and parallel to the same - into the corrugated protective tube 2, when the filling-element is still in its unexpanded state. After the insertion of the filling-element the function of the cabling 1 is preferably, but not necessarily tested with a specially adapted test apparatus- When the function of the cabling 1 has been assured, the filling-element 6 is made to expand - by way of heat supply - within the protective tube 2 in such a way that the remaining space is at least partially filled. After the expansion, the cabling 1 exhibits a cross-section according to Figure 2.

In cases when the filling-element 6 is not provided with an electric heating wire according to the description above, heat supply may alternatively be obtained by heating the cabling 1 to a temperature within the interval 90°C to 120°C preferably 100°C to 110°C during a sufficient time period for the foam-material to be completely expanded. The heating takes place from outside of the protective tube 2, preferably by winding the cabling 1 into a spiral and inserting it into a suitable heating furnace. When the cabling is then removed from the heating furnace, the filling-element has thus transformed into its expanded state and the cabling is ready to be assembled in the vehicle.

In the case where the filling-element 6 is not provided with an electric heating wire 7, according to Figures 3 and 4, the heat supply may alternatively be achieved in a very effective way by connecting the ends (not shown) of the heating wires 7 to said test apparatus. When the function of the cabling has been assured, the heating wire 7 is simply subjected to an electric current, whereby the filling-element 6 expands. Thus, functional testing and expansion may take place at the same station, which means a very advantageous time saving which is highly desirable in mass production. In an alternative method, the heating wire 7 may be subjected to an electric current when the cabling J. has been assembled on the vehicle.

In Figure 5 and 6, a third embodiment of the invention is shown, in which the filling-element 6 is tube-shaped and completely surrounds the cables 3. In Figure 5, it is also shown that the filling-element exhibits a circular cross-section. In Figure 6 the embodiment is shown with the filling-element 6 in its expanded state. Upon assembly of the cabling, the tube-shaped filling-element 6 is first applied around the cables 3 and the thus formed packages is inserted into the protective tube 2.

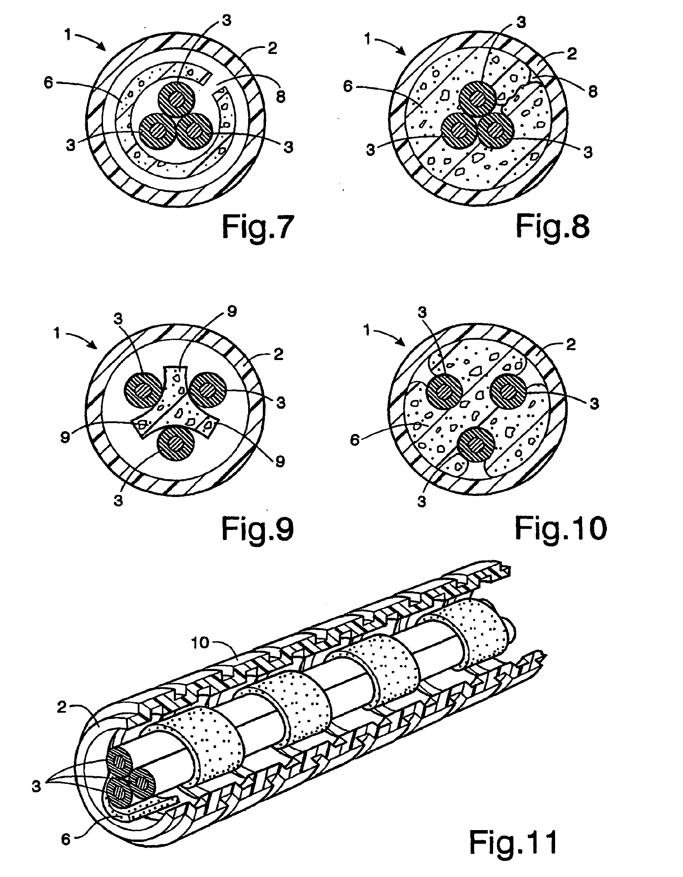

In Figure 7 and 8, a fourth embodiment of the invention is shown, in which the filling-element 6 is tube-shaped and additionally exhibits a slit 8 extending in the longitudinal direction of the filling-element 6. Hereby, assembly is eased compared to the embodiments shown in Figure 5 and 6, since the cables are easily inserted as the slit 8 is widened. In Figure 8, the filling-element 6 is shown in its expanded state.

In Figures 9 and 10, a fifth embodiment of the invention is shown, in which the filling-element 6 exhibits a star-shaped cross-section. Since the shown cabling 1 merely comprises three cables 3, the star Formed by the cross-section of the filling-element 6 only has three legs 9. The cables 3 may then advantageously be positioned between said legs 9, in such a way that they are equally distributed around the filling-element 6. In Figure 10, the filling-element 6 is shown in its expanded state.

In Figure 11, a sixth embodiment is shown, in which the filling-element 6 exhibits a rectangular cross-section and is wound as a spiral about the cables 3. In the figure, the filling-element 6 is shown in its unexpended state. Furthermore, the corrugations 10 of the protective tube is clearly shown.

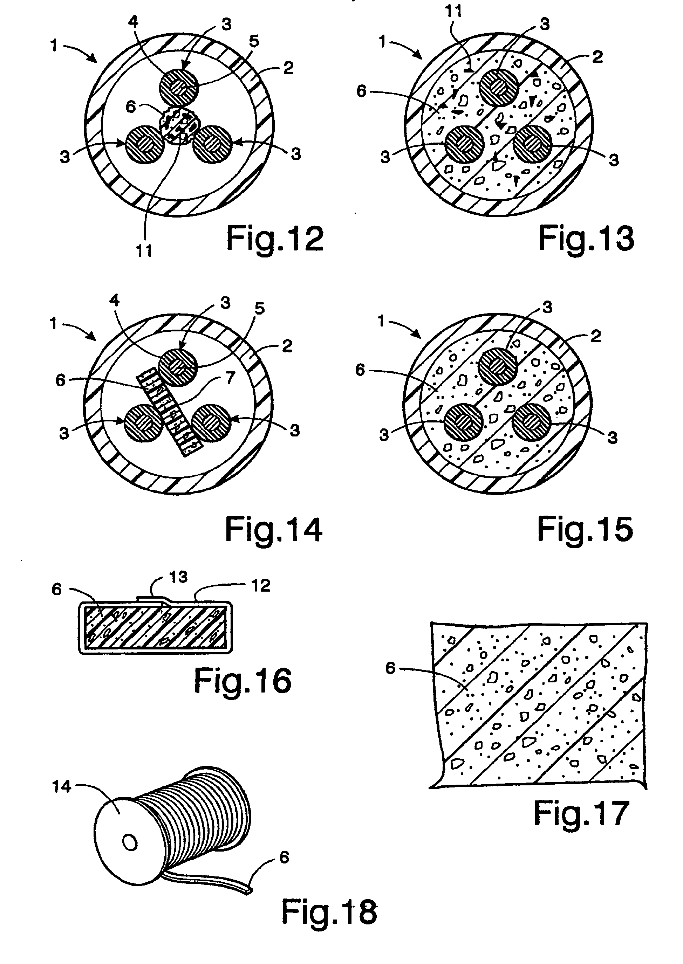

In figure 12, a seventh embodiment is shown, in which the filling-element 6 contains magnetic metal particles 11 which are adapted to be heated by external induction, thus indirectly causing said transformation of the filling-element 6. By the term "external induction" it is meant that an induction generator (not shown) of a well known type is placed outside of the protective tube 2, said induction generator causing quick changes in magnetic polarity, which induces an electric current in the magnetic metal particles. In figure 13, the filling-element 6 is shown in its expanded state. In this way, as in the previously described embodiment where the filling-element 6 contains an electric heating wire 7, a local heating is achieved within the filling-element 6 itself, which means that any risk of heat-induced damage to the protective tube 2 or the cables is effectively avoided. The magnetic metal particles 7 may favorably be evenly distributed within the filling-element 6, and may be of various shapes and sizes.

In figure 14, an eighth embodiment is shown, in which the filling-element 6 has a rectangular cross-section and is adapted to be expanded from a first, pre-compressed state to a second, expanded and substantially uncompressed state by the removal of a sealing film 1.2 applied on said filling-element 6. The expansion is initiated at or about the insertion into the protection tube 2. A lightly adhesive or "slicky" substance, preferably including a bitumen emulsion, is applied to the cell walls (not shown) of the foam-material at or prior to the pre-compression of said foam-material, whereby the expansion of the foam-material from the first, pre-compressed state, progresses gradually over a predetermined time period after the removal of said sealing film 12. The predetermined time period is within the interval 20 to 90 minutes, preferably within the interval 30 to 60 minutes, which gives the assembly personnel ample time to insert the filling-element 6 into the protective tube 2 before the expansion is completed. In this embodiment, the expansion of the filling-element 6 is achieved entirely without heat supply, which saves cost and eliminates the risk of heat-induced damages to the cabling during the expansion process. The foam-material used in the above example is polyurethane based. The foam-material is treated, prior to its compression, in a bath containing water and said bitumen emulsion. The preferred bitumen emulsion is known as Be 60m.

In figure 16, a filling-element 6 according to the embodiment shown in figures 14 and 15 is shown in its pre-compressed state. The filling-element is compressed by means of so called vacuum compression, and is sealed from air with the surrounding sealing film 12. The sealing film 12 is thus air-tight and suitably made of a thin plastic. It may advantageously be joined in a longitudinal seal 13 which is easily broken by the assembly personnel prior to insertion of the filling-element into the protective tube 2. The seal 13 may be obtained by gluing, heat-sealing or any other suitable method.

In figure 17, the filling element 6 of the embodiment in figure 16 is shown in its uncompressed, expanded state - the sealing film 12 having been removed prior to the expansion.

In figure 18, a packaging roll 14 containing a length of filling-element 6 is shown. The packaging roll 14 represents a practical way of handling the pre-compressed filling-element material prior to assembly. The sealing film 12 (not shown) may be applied around the Filling-element 6 as shown in figure 17 or over the entire packaging roll 14.

In conclusion, the invention provides an effective solution to the problem with wear of the cables 3 of the cabling 1 as a consequence of vehicle vibrations. Since the foam-material which is used in the invention, is preferably cross-linked (vulcanized) at the expansion, a filling-material is obtained which decreases the water absorption of the cabling to a high extent In the embodiments where the transformation or expansion of the filling-element is achieved by heat supply, the polyethylene based foam-material is of a type which today is used for noise-reducing purposes as filling in vehicle body void spaces. The English term "Expandable Sealing Material" (ESM) is used for this foam-material. An applicable foam-material has the name ANTIPHON ESM which is available from the manufacture Perstorp Components.

The invention is not limited to the embodiments described above and shown on the drawings, but may be freely varied within the scope of the appended claims. For example, the cross-section of the filling-element 6 may exhibit a number of conceivable polygon shapes not shown in the drawings.

## Claims

1. Method for manufacturing a wear-resistant cabling (1) for a vehicle, said cabling (1) comprising a different number of insulated conductors at different parts of the cabling, the conductors (3) being housed within a protective, against mechanical wear resistant tube (2), said tube having a filling between the cabling and the tube,
**characterized in**:
- inserting a longitudinal filling-element (6) comprising an expandable foam-material into the protective tube (2) along with the conductors, said filling-element (6) being in a substantially unexpanded state during the insertion,
- expanding said filling-elcmcnl (6) in such a way that after insertion the remaining space within the protective tube (2) is substantially filled.

2. Method according to claim 1, **characterized in that** the filling-element (6) is expanded by heating the exterior of the protective tube (2) of the cabling (1).

3. Method according to claim 1. or 2, **characterized in that** the filling-element (6) is expanded by heat generated in magnetic metal particles (11) as a result of external induction heating, said metal particles (11) being contained in the filling element (6).

4. Method according to claim 1 or 2, **characterized** i n that the filling-element (6) is expanded by activating an electric heating wire (7) arranged in the filling-element (6).

5. Method according to any of the preceding claims, **characterized in that** the expandable foam-material comprises a thermoplastic material including a fermentation agent.

6. Method according to claim 5, **characterized in that** the thermoplastic material is based on polyethylene.

7. Method according to claim 5 or 6, **characterized in that** the expandable foam-material is heated to a temperature in the interval 90°C to 120°C, and preferably 100°C to 110°C, during the expansion.

8. Method according to claim 1, **characterized in that** the filling-element (6) is expanded from a first, pre-compressed state to a second, expanded and substantially uncompressed state by removing a sealing film (12) applied on said filling-element (6), said expansion being initiated at or about the insertion into the protection tube (2).

9. Method according to claim 8, **characterized in that** the expansion of the foam-material from its first, pre-compressed state, is made to progress gradually over a predetermined time period by applying a lightly adhesive substance to the cell walls of the foam-material at or prior to the pre-compression of said foam-material.

10. Method according to claim 9, **characterized in that** said adhesive substance includes a bitumen emulsion.

11. Method according to claim 9 or 10, **characterized in that** said predetermined time period is within the interval 20 to 90 minutes, preferably within the interval 30 to 60 minutes.

12. Method according to any of claims 9 to 11, **characterized in that** said pre-compression is achieved by means of so called vacuum compression.

13. Method according to any of the preceding claims, **characterized in that** the filling-element is inserted substantially parallel to the cables (3) in the protective tube (2).

14. Method according to any of the preceding claims, **characterized in that** the filling-element is wound as a spiral about the cables (3).

15. Method according to any of the preceding claims, **characterized in that** the cabling (1) is function-tested before the expansion of the filling-element (6).

## Revendications

1. Procédé de fabrication d'un câblage résistant à l'usure (1) pour un véhicule, ledit câblage (1) comprenant un nombre différent de conducteurs isolés en différentes parties du câblage, les conducteurs (3) étant logés à l'intérieur d'un tube protecteur résistant à l'usure mécanique (2), ledit tube présentant un remplissage entre le câblage et le tube,
**caractérisé par** :
- l'introduction d'un élément de remplissage longitudinal (6) comprenant une mousse dilatable dans le tube protecteur (2) conjointement avec les conducteurs, ledit élément de remplissage (6) se trouvant dans un état sensiblement comprimé durant l'introduction,
- la dilatation dudit élément de remplissage (6), de telle manière qu'après introduction, l'espace subsistant à l'intérieur du tube protecteur (2) est sensiblement comblé.

2. Procédé selon la revendication 1, **caractérisé en ce que** l'élément de remplissage (6) est dilaté en chauffant l'extérieur du tube protecteur (2) du câblage (1).

3. Procédé selon la revendication 1 ou 2, **caractérisé en ce que** l'élément de remplissage (6) est dilaté par la chaleur générée dans des particules métalliques magnétiques (11) en résultat d'un chauffage par induction externe, lesdites particules métalliques (11) étant contenues dans l'élément de remplissage (6).

4. Procédé selon la revendication 1 ou 2, **caractérisé en ce que** l'élément de remplissage (6) est dilaté en activant un fil chauffant électrique (7) disposé dans l'élément de remplissage (6).

5. Procédé selon une quelconque des revendications précédentes, **caractérisé en ce que** la mousse dilatable comprend un élément thermoplastique contenant un agent de fermentation.

6. Procédé selon la revendication 5, **caractérisé en ce que** l'élément thermoplastique est à base de polyéthylène.

7. Procédé selon la revendication 5 ou 6, **caractérisé en ce que** la mousse dilatable est chauffée à une température comprise entre 90°C et 120°C, et de préférence entre 100°C et 110°C, durant la dilatation.

8. Procédé selon la revendication 1, **caractérisé en ce que** l'élément de remplissage (6) est dilaté depuis un premier état précomprimé dans un second état dilaté et sensiblement décomprimé en retirant un film d'étanchéité (12) appliqué sur ledit élément de remplissage (6), ladite dilatation étant déclenchée lors de l'introduction dans le tube de protection (2).

9. Procédé selon la revendication 8, **caractérisé en ce que** la dilatation de la mousse depuis son premier état précomprimé est effectuée pour progresser graduellement sur un période de temps prédéterminée en appliquant une substance légèrement adhésive aux parois de cellule de la mousse lors ou avant la précompression de ladite mousse.

10. Procédé selon la revendication 9, **caractérisé en ce que** ladite substance adhésive comprend un émulsion bitumineuse.

11. Procédé selon la revendication 9 ou 10, **caractérisé en ce que** ladite période de temps prédéterminée est comprise entre 20 et 90 minutes, de préférence entre 30 et 60 minutes.

12. Procédé selon l'une quelconque des revendications 9 à 11, **caractérisé en ce que** ladite précompression est effectuée par compression sous vide.

13. Procédé selon l'une quelconque des revendications précédentes, **caractérisé en ce que** l'élément de remplissage est introduit sensiblement parallèlement aux câbles (3) dans le tube protecteur (2).

14. Procédé selon l'une quelconque des revendications précédentes, **caractérisé en ce que** l'élément de remplissage est enroulé hélicoïdalement autour des câbles (3).

15. Procédé selon l'une quelconque des revendications précédentes, **caractérisé en ce que** le câblage (1) est contrôlé fonctionnellement avant la dilatation de l'élément de remplissage (6).

## Patentansprüche

1. Verfahren zum Herstellen einer verschleißfesten Verkabelung (1) für ein Fahrzeug, wobei die Verkabelung (1) eine unterschiedliche Anzahl von isolierten Leitern an unterschiedlichen Teilen der Verkabelung aufweist, die Leiter (3) innerhalb eines schützenden Schlauches (2) aufgenommen sind, welcher gegen einen mechanischen Verschleiß beständig ist, wobei der Schlauch eine Füllung zwischen der Verkabelung und dem Schlauch aufweist,
**gekennzeichnet durch** die Verfahrensschritte
- des Einführens eines sich in Längsrichtung erstreckenden Füllelements (6), welches ein aufschäumbares bzw. ausdehnbares Schaummaterial aufweist, in den schützenden Schlauch (2) zusammen mit den Leitern, wobei sich das Füllelement (6) während der Einführung in einem im Wesentlichen nicht ausgedehnten Zustand befindet; und
- des Ausdehnens des Füllelements (6) derart, dass nach der Einführung der übrige Raum innerhalb des schützenden Schlauches (2) im Wesentlichen gefüllt ist.

2. Verfahren nach Anspruch 1, **dadurch gekennzeichnet, dass** das Füllelement (6) durch Erhitzen der Außenseite des schützenden Schlauches (2) der Verkabelung (1) ausgedehnt wird.

3. Verfahren nach Anspruch 1 oder 2, **dadurch gekennzeichnet, dass** das Füllelement (6) durch Wärme ausgedehnt wird, welche in magnetischen Metallpartikeln (11) infolge der äußeren Induktionserwärmung erzeugt wird, wobei die Metallpartikel (11) in dem Füllelement (6) enthalten sind.

4. Verfahren nach Anspruch 1 oder 2, **dadurch gekennzeichnet, dass** das Füllelement (6) durch das Aktivieren eines elektrischen Heizdrahtes (7) ausgedehnt wird, welcher in dem Füllelement (6) angeordnet ist.

5. Verfahren nach einem der vorangehenden Ansprüche, **dadurch gekennzeichnet, dass** das ausdehnbare Schaummaterial ein thermoplastisches Material einschließlich eines Fermentationsmittels aufweist.

6. Verfahren nach Anspruch 5, **dadurch gekennzeichnet, dass** das thermoplastische Material auf Polyethylen basiert.

7. Verfahren nach Anspruch 5 oder 6, **dadurch gekennzeichnet, dass** das ausdehnbare Schaummaterial während der Ausdehnung auf eine Temperatur im Bereich von 90°C bis 120°C, und vorzugsweise im Bereich von 100°C bis 110°C, erhitzt wird.

8. Verfahren nach Anspruch 1, **dadurch gekennzeichnet, dass** das Füllelement (6) von einem ersten vorverdichteten Zustand in einen zweiten ausgedehnten und im Wesentlichen unverdichteten Zustand durch das Entfernen eines Abdichtfilms (12) ausgedehnt wird, welcher auf das Füllelement (6) aufgetragen ist, wobei die Ausdehnung bei oder in etwa bei der Einführung in den schützenden Schlauch eingeleitet wird.

9. Verfahren nach Anspruch 8, **dadurch gekennzeichnet, dass** die Ausdehnung des Schaummaterials von seinem ersten vorverdichteten Zustand über eine vorbestimmte Zeitdauer durch das Auftragen einer leicht haftenden Substanz auf die Zellwände des Schaummaterials bei oder vor der Vorverdichtung des Schaummaterials schrittweise fortschreitend ausgeführt wird.

10. Verfahren nach Anspruch 9, **dadurch gekennzeichnet, dass** die haftende Substanz eine Bitumenemulsion beinhaltet.

11. Verfahren nach Anspruch 9 oder 10, **dadurch gekennzeichnet, dass** die vorbestimmte Zeitdauer innerhalb des Bereiches von 20 bis 90 Minuten, vorzugsweise innerhalb des Bereiches von 30 bis 60 Minuten, liegt.

12. Verfahren nach einem der Ansprüche 9 bis 11, **dadurch gekennzeichnet, dass** die Vorverdichtung mittels einer sogenannten Vakuumverdichtung erzielt wird.

13. Verfahren nach einem der vorangehenden Ansprüche, **dadurch gekennzeichnet, dass** das Füllelement im Wesentlichen parallel zu den Kabeln (3) im schützenden Schlauch (2) eingeführt wird.

14. Verfahren nach einem der vorangehenden Ansprüche, **dadurch gekennzeichnet, dass** das Füllelement als Spirale um die Kabel (3) gewickelt wird.

15. Verfahren nach einem der vorangehenden Ansprüche, **dadurch gekennzeichnet, dass** die Verkabelung (1) vor der Ausdehnung des Füllelements (6) hinsichtlich der Funktion geprüft wird.
